# EUROPEAN PATENT APPLICATION

(11) **EP 2 407 908 A1**
(43) Date of publication of application: **18.01.2012**
(21) Application number: 09841491.5
(22) Date of filing: 13.03.2009
(51) Int. Cl.: G06F 21/20

(54) **PERSON AUTHENTICATION SYSTEM AND PERSON AUTHENTICATION METHOD**

(71) Applicant: Fujitsu Limited, Kawasaki-shi, Kanagawa 211-8588 (JP)
(72) Inventor: SHINZAKI, Takashi, Kawasaki-shi Kanagawa 211-8588 (JP)
(74) Representative: HOFFMANN EITLE
(86) International application number: PCT/JP2009/054938
(87) International publication number: WO 2010/103663

(57) **Abstract**

A person authentication system includes: an authentication server storing biometric data for matching related to an anonymous ID of a user; a biometric sensor acquiring biometric data of the user; and a terminal acquiring an anonymous ID stored in an electronic storage medium and transmitting the anonymous ID to the ... authentication server together with the biometric data acquired by the biometric sensor, wherein the authentication server transmits data needed for an access to personal data stored in the electronic storage medium to the terminal when there is a correspondence to a predetermined extent between the biometric data acquired by the biometric sensor and biometric data for matching related to the anonymous ID.

## Description

### FIELD

The present invention relates to a person authentication system and a person authentication method in which an electronic storage medium technology and a biometric authentication technology are combined.

### BACKGROUND

In a conventional combination technology of an electronic storage medium and biometric authentication, there is disclosed an art of storing personal data and biometric data in an electronic storage medium and permitting an access to the personal data after confirming a user's identification with the biometric data (see Patent Document 1).

And, there is disclosed an art of storing personal data and biometric data in an authentication server and permitting an access to the data when confirming that transmitted biometric data is the user's and the transmitted biometric data is the user's biometric data (see Patent Document 2).
Patent Document 1: Japanese Laid-Open Patent Publication. No. 61-199162
Patent Document 2: International Publication No. WO 2001/042938

### DISCLOSURE OF THE INVENTION

### PROBLEMS TO BE SOLVED BY THE INVENTION

However, in the arts mentioned above, there is a demand for managing personal data and biometric data in a single medium. In particular, an electronic storage medium (for example, an IC card) does not belong to an actual storing person (user) but is lent to the storing person from a parent organization of the IC card. When biometric data is stored in an IC card, it is necessary for the parent organization to manage a life cycle (registering, issuing, stopping and discarding) of the IC card strictly. Therefore, the management is complicated when biometric data is stored in a card tending to be scattered. And, both personal data and biometric data are exposed to a risk when weakness of the IC card is exposed.

In view of the problem described above, the present invention has an object to provide an authentication system and an authentication method improving safety of personal data and biometric data.

### MEANS FOR SOLVING THE PROBLEMS

There is provided a person authentication system discussed herein includes: an authentication server storing biometric data for matching related to an anonymous ID of a user; a biometric sensor acquiring biometric data of the user; and a terminal acquiring an anonymous ID stored in an electronic storage medium and transmitting the anonymous ID to the authentication server together with the biometric data acquired by the biometric sensor, wherein the authentication server transmits data needed for an access to personal data stored in the electronic storage medium to the terminal when there is a correspondence to a predetermined extent between the biometric data acquired by the biometric sensor and biometric data for matching related to the anonymous ID.

There is provided a person authentication method discussed herein includes: storing biometric data for matching related to an anonymous ID of a user in an authentication, server; acquiring biometric data of the user with use of a biometric sensor; acquiring an anonymous ID stored in an electronic storage medium and transmitting the anonymous ID to the authentication server together with the biometric data acquired by the biometric sensor; with use of a terminal; and transmitting data needed for an access to personal data stored in the electronic medium to the terminal when there is a correspondence to a predetermined extent between the biometric data acquired by the biometric sensor and biometric data for matching related to the anonymous ID.

### EFFECTS OF THE INVENTION

According to the person authentication system and the person authentication method disclosed herein, data needed for identification may be separately managed in an electronic storage medium and an authentication server. It is therefore possible to improve safety of the personal data and the biometric data.

### BRIEF DESCRIPTION OF DRAWINGS

FIG. 1 illustrates a block diagram for describing a structure of a person authentication system in accordance with an embodiment 1;
Fig. 2 illustrates a flow of a registration method of data to an IC card;
Fig. 3 illustrates a sequence of issuing an IC card;
FIG. 4 illustrates a block diagram for describing a structure of a person authentication system in accordance with an embodiment 2;
FIG. 5 illustrates a block diagram for describing a structure of a person authentication system in accordance with an embodiment 3;
FIG. 6 illustrates a block diagram for describing a structure of a person authentication system in accordance with a modified embodiment of the embodiment 3;
FIG. 7 illustrates a block diagram for describing a structure of a person authentication system in accordance with an embodiment 4;
FIG. 8 illustrates a making sequence of a hash value;
FIG. 9 illustrates a block diagram for describing a structure of a person authentication system in accordance with a modified embodiment of the embodiment 4;
FIG. 10 illustrates a making sequence of a hash value;
FIG. 11 illustrates an IC card storing a plurality of personal data;
FIG. 12 illustrates a block diagram for describing a structure of a person authentication system in accordance with an embodiment 5;
FIG.13 illustrates a block diagram for describing a structure of a person authentication system in accordance with a modified embodiment of the embodiment 5; and
FIG. 14 illustrates a component structure of an IC card and a biometric data authentication server in accordance with each embodiment.

### DESCRIPTION OF EMBODIMENTS

A description will be given of embodiments of the invention, with reference to drawings.

### EMBODIMENT 1

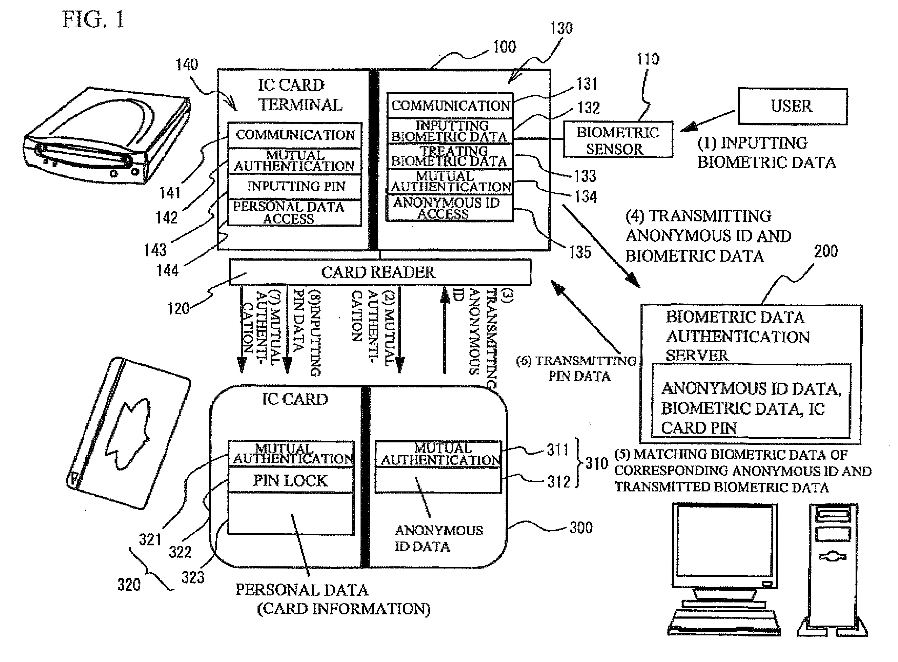

FIG. 1 illustrates a block diagram for describing a structure of a person authentication system in accordance with an embodiment 1. In the embodiment, an IC card is used as an example of an electronic storage medium. As illustrated in FIG. 1, the person authentication system in accordance with the embodiment 1 has a structure in which an IC card terminal 100 is coupled to and may communicate with a biometric data authentication server 200 via a network. A public line network, Internet, an intranet or the like may be used as the network.

The IC card terminal 100 has a biometric sensor 110, a card reader 120, a biometric authentication portion 130, and an IC card authentication portion 140. The biometric sensor 110 is a sensor for acquiring biometric data of a user. In the embodiment, a finger print sensor is used as an example of the biometric sensor 110. The card reader 120 is a device for reading data from an IC card 300 described later and writing data in the IC card 300. The card reader 120 may be a contact-type reader or a non-contact-type reader.

The biometric authentication portion 130 acts as a communication portion 131, a biometric data input portion 132, a biometric data treating portion 133 a mutual authentication portion 134 and an anonymous ID access portion 135. The IC card authentication portion 140acts as a communication portion 141, a mutual authentication portion 142, a PIN input portion 143, and a personal data access portion 144. Here, "PIN" is a Personal Identification Number. The biometric data authentication server 200 stores anonymous data, biometric data and an IC card PIN in a database. The biometric authentication server may physically separate the anonymous data, the biometric data and the IC card PIN via a network And, the biometric data and the IC card may be encrypted and stored.

The IC card 300 used in the person authentication system in accordance with the embodiment is a multi application card having a plurality of application areas. The IC card 300 has a plurality of application areas in which an access to each other is forbidden by a firewall. There may be used an attribute control method for permitting an access to a memory in accordance with attribute data, a page management method for permitting an access with use of a page number and a local address, a virtual machine method in which a virtual machine interprets an AP (application) program and executes the interpreted AP or the like, as the firewall. Here, the attribute data includes an attribute such as "read only", "write only", "executable", "inaccessible" or the like. The "page" is a unit indicating a logical arrangement of the AP in the memory.

In the embodiment, the IC card 300 has an anonymous ID data portion 310 in a predetermined application area and has a personal data portion 320 in another application area. The anonymous ID data portion 310 acts as a mutual authentication portion 311 and an anonymous ID data storage portion 312. The personal data portion 320 acts as a mutual authentication portion 321, a PIN lock portion 322 and a personal data storage portion 323.

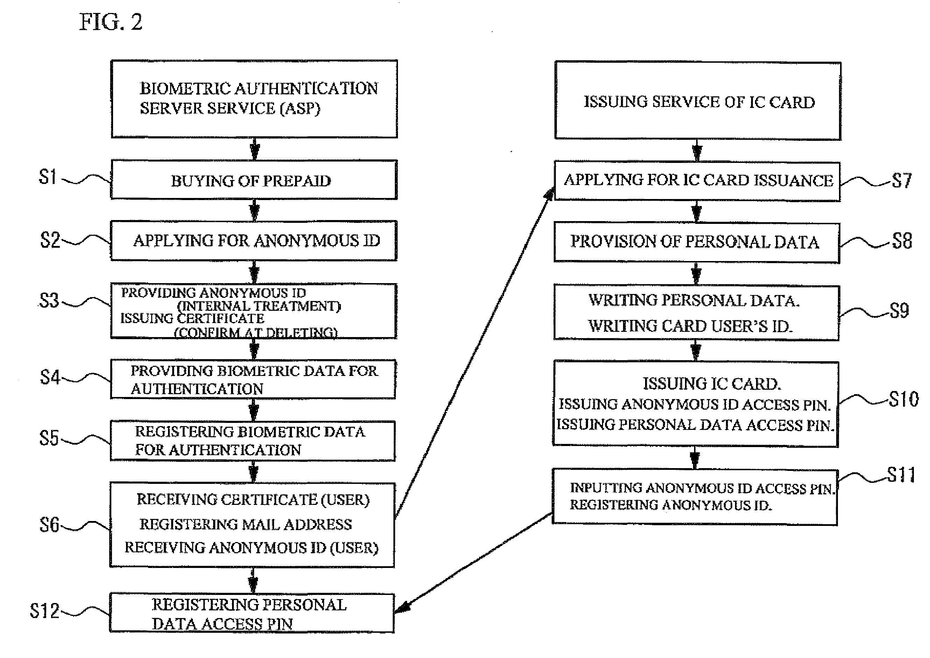

FIG. 2 illustrates a flow example of a registration method of personal data to the IC card 300. In FIG. 2, as an example, a service provider of a biometric authentication server for managing the biometric data authentication server 200 is independent of a service provider of issuing of an IC card. There may be one or more providers providing a final service, under the service provider of issuing of an IC card.

A user buys right to use by prepaid system (Step S 1), and applies for an anonymous ID without revealing personal data (Step S2). The service provider of a biometric authentication server provides an anonymous ID and issues a certificate (Step S3). And, the service provider of a biometric authentication server receives biometric data for registration from the user (Step S4), and registers the biometric data in the biometric data authentication server 200 (Step S5). Next, the user receives the certificate, receives the anonymous ID, and provides a communication tool such as a mail address to the service provider of a biometric authentication server (Step S6).

After that, the user asks the service provider of issuing an IC card for issuing of the IC card 300 (Step S7), and provides personal data to the service provider of issuing an IC card (Step S8). The service provider of issuing an IC card writes the personal data and an ID of the user in the IC card 300 (Step S9). Next, the service provider of issuing an IC card issues the IC card 300, issues an anonymous ID access PIN, and issues a personal data access PIN (Step S10).

Next, the user registers his or her anonymous ID in the IC card 300 with use of the anonymous ID access PIN via the service provider of issuing of an IC card (Step S11). Next, the service provider of a biometric authentication server registers a PIN for accessing personal data in the biometric data authentication server 200 (Step S12). With the flow, the biometric data is registered in the biometric data authentication server 200, and the personal data is registered in the IC card 300.

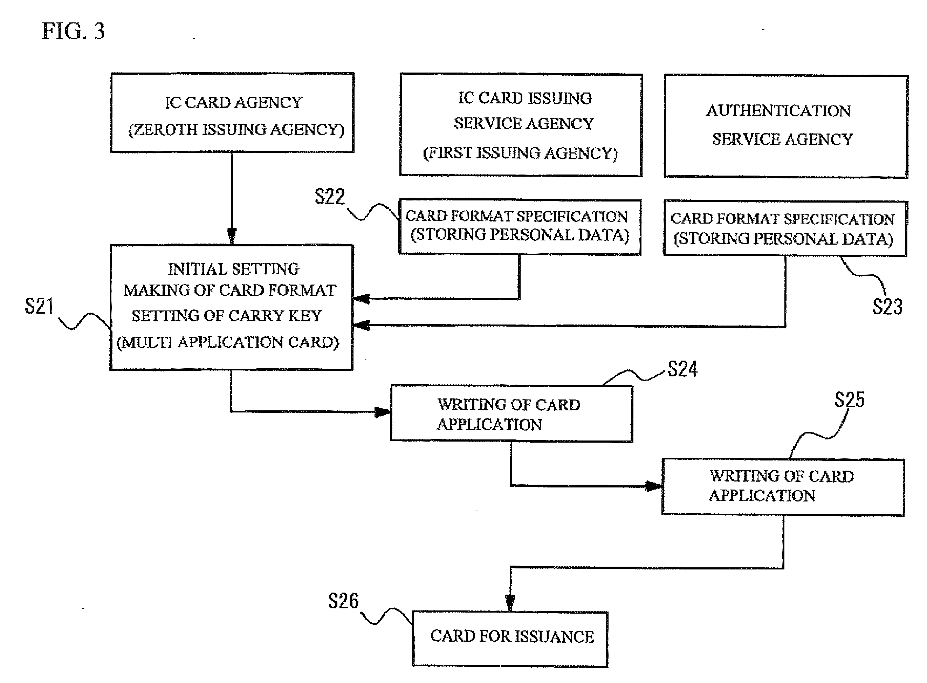

FIG 3 illustrates a sequence for issuing the IC card 300. In FIG 3, an IC card agency is an agency for issuing an IC card (zeroth agency). An IC card issuing service agency is an agency for making a format specification of the personal data portion 320 of the IC card 300 (first agency). An authentication service agency is an agency for making a format specification of the anonymous ID data portion 310.

As illustrated in FIG, 3, the IC card agency makes a card format by default, sets a carry key, and sets the IC card 300 to be a multi application card specification (Step S21). Next, the IC card issuing service agency sets the card format specification in the IC card 300 for the personal data portion 320 (Step S22). And, the authentication service agency sets the card format specification in the IC card 300 for the anonymous ID data portion 310 (Step S23).

Next, the IC card issuing service agency writes a card application in the IC card 300, and makes the personal data portion 320 in the IC card 300 (Step S24). And, the authentication service agency writes a card application in the IC card 300, and makes the anonymous ID data portion 310 (Step S25). Next, the IC card issuing service agency issues the IC card 300 (Step S26).

As mentioned above, it is possible to make a situation that an IC card maker, an agency setting the personal data portion 320 and an agency setting the anonymous ID data portion 310 are independent of each other. Therefore, safety of personal data is improved.

Then, with reference to FIG. 1, a description will be given of an operation of the person authentication system in accordance with the embodiment 1, The biometric sensor 110 acquires biometric data of a user. The biometric data input portion 132 inputs the biometric data acquired by the biometric sensor 110 in the biometric data treating portion 133. The biometric data treating portion 133 converts the biometric data into a data for matching.

Next, the mutual authentication portion 134 and the mutual authentication portion 311 of the IC card 300 mutually authenticate each other via the IC card reader 120. When the mutual authentication is complicated, the anonymous ID access portion 135 reads anonymous ID data of the user from the anonymous ID data storage portion 312. The communication portion 131 transmits the anonymous ID data and the biometric data of the user to the biometric data authentication server 200.

The biometric data authentication server 200 performs a matching of the received biometric data. In this case, the biometric data authentication server 200 confirms a correspondence to a predetermined extent between the received biometric data and biometric data related to a registered anonymous ID user, and transmits an IC card PIN to the IC card terminal 100 when determining that the received biometric data is biometric data of the registered anonymous ID user. In this case, the PIN may be encrypted and transmitted.

The communication portion 141 receives the IC card PIN from the biometric data authentication server 200. Thus, the mutual authentication portion 142 and the mutual authentication portion 321 of the IC card 300 mutually authenticate each other. When the mutual authentication is complicated, the PIN input portion 143 inputs data of the IC card PIN to the PIN lock portion 322 of the IC card 300. If the IC card PIN received from the biometric data authentication server 200 corresponds to the IC card PIN stored in the IC card 300, the PIN lock portion 322 unlocks the PIN lock. Next, the personal data access portion 144 reads personal data from the personal data storage portions 323 of the IC card 300. With the operation, the user can access his or her personal data,

In accordance with the embodiment, personal data and biometric data can be stored in the IC card 300 and the biometric data authentication server 200 separately. Therefore, the biometric data stored in the biometric data authentication server 200 can be kept anonymous. And, it is possible to manage a lifecycle of biometric data for authentication adequately by storing subtlety biometric data not in a card medium tending to be scattered but in the biometric data authentication server 200.

And, it is not necessary for a user to go to a place for registering biometric data again even if the user loses the IC card 300 and asks for reissuing of a new IC card 300, because biometric data is not stored in the IC card 300. It is therefore possible for the agency to reissue a new card by inputting necessary data in the new card and send the new card by mail.

And, both the personal data (data stored in a card) and the biometric data are not exposed to a risk when weakness of the IC card 300 is exposed, because data is separately stored. And, anonymity can be stored because the IC card 300 and the IC card terminal 100 have a structure treating personal data and biometric data separately.

The IC card terminal 100 may be a device coupled to a personal computer or a device operating independently. Safety of a communication path may be secured by a tool such as secure messaging between the IC card terminal 100 and the IC card 300. Further, the IC card terminal 100 and the biometric data authentication server 200 may communicate with each other with use of an encrypted communication tool such as SSL (Secure Socket Layer).

### EMBODIMENT 2

In an embodiment 2, a description will be given of an example for achieving an access to personal data stored in a personal data management server when an access to personal data in an IC card is permitted.

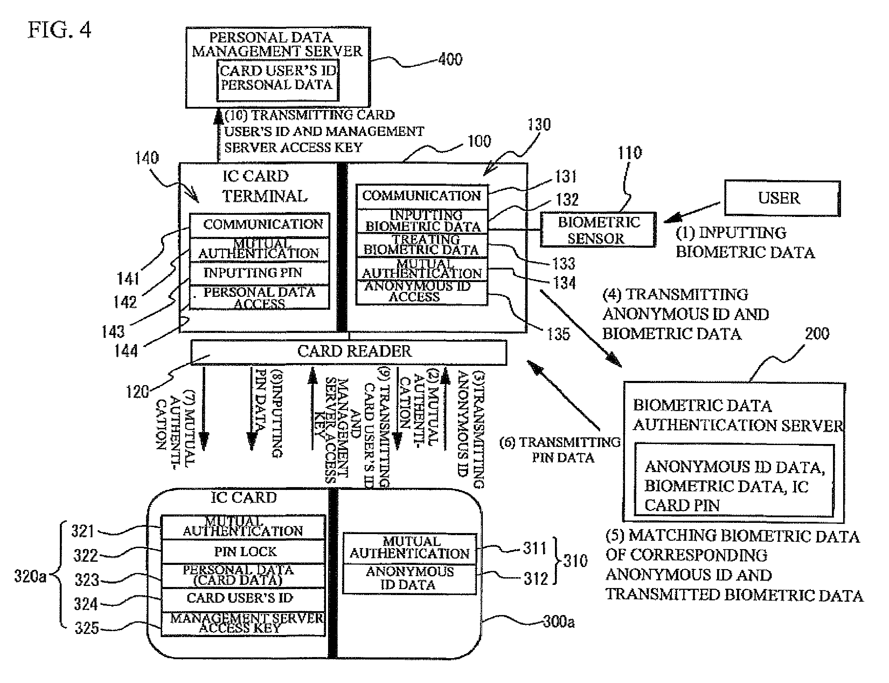

FIG. 4 illustrates a block diagram for describing a person authentication system in accordance with the embodiment 2. In FIG. 4, a personal data management server 400 is further provided. And, an IC card 300a is illustrated instead of the IC card 300. The IC card 300a is different from the IC card 300 in points that a personal data portion 320a is provided instead of the personal data portion 320, and a card-user-ID-storage portion 324 and a management-server-access-key-storage portion 325 are further provided.

In the embodiment, the personal data access portion 144 can access the personal data storage portion 323 when the PIN lock is unlocked. In this case, the personal data access portion 144 reads a card user's ID from the card-user-ID-storage portion 324 via the personal data storage portion 323, and reads a management server access key from the management-server-access-key-storage portion 325.

Next, the communication portion 141 transmits the card user ID and the management server access key to the personal data management server 400. Thus, a user can access the personal data stored in the personal data management server 400 via the ID card terminal 100.

In accordance with the embodiment, data needed for identification can be stored in the biometric data authentication server 200 and the personal data management server 400 separately. It is therefore possible to improve safety of the personal data and the biometric data. The personal data management server 400 may store the personal data. Thus, leakage of personal data may be prevented even if the IC card 300 is lost.

### EMBODIMENT 3

An art of selecting one of services is needed, when a plurality of biometric data authentication server services are set. And so, in an embodiment 3, an IC card has a service provider list of biometric data authentication server.

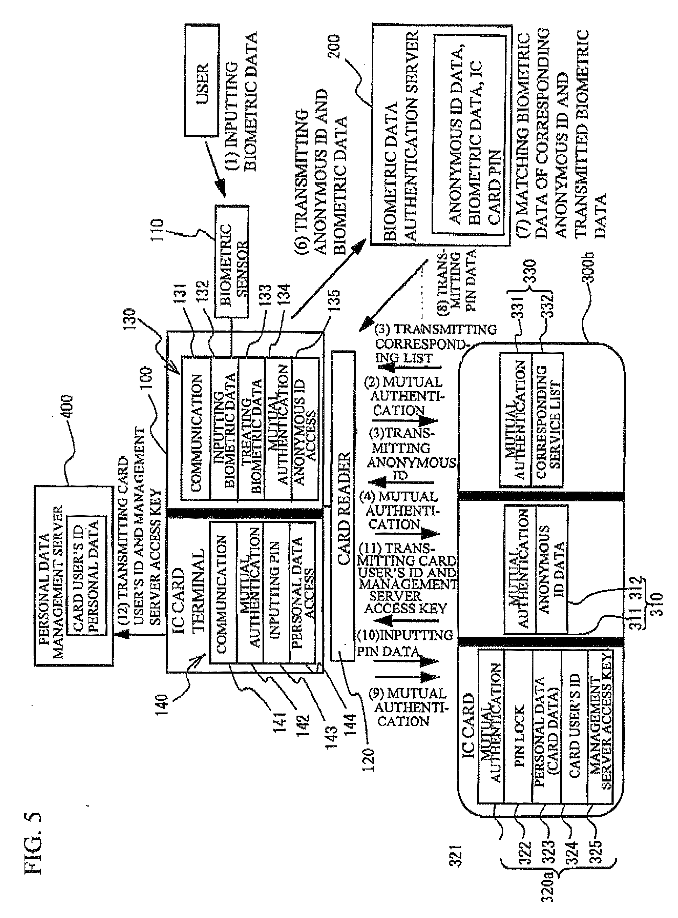

FIG. 5 illustrates a block diagram for describing a structure of a person authentication system in accordance with an embodiment 3. The person authentication system in accordance with the embodiment 3 is different from the person authentication system in accordance with the embodiment 2 in a point that an IC card 300b is used instead of the IC card 300a.

As illustrated in FIG. 5, the IC card 300b is different from the IC card 300a in a point that a service list portion 330 is further provided. The service list portion 330 acts as a mutual authentication portion 331 and a corresponding-service-list storage portion 332. The corresponding-service-list storage portion 332 stores a list of a plurality of biometric data authentication server services. In the service list portion 330, a firewall forbids a mutual access between the personal data portion 320 and the anonymous ID data portion 310.

In the embodiment, the IC card terminal 100 reads a plurality of biometric data authentication server services from the corresponding-service-list storage portion 332 when the mutual authentication is complicated between the mutual authentication portion 134 and the mutual authentication portion 331. For example, the IC card terminal 100 displays the biometric data authentication server services with use of a display, and a user may select one of them. Therefore, the user can select a desirable one from the biometric data authentication server services.

### (Modified Embodiment)

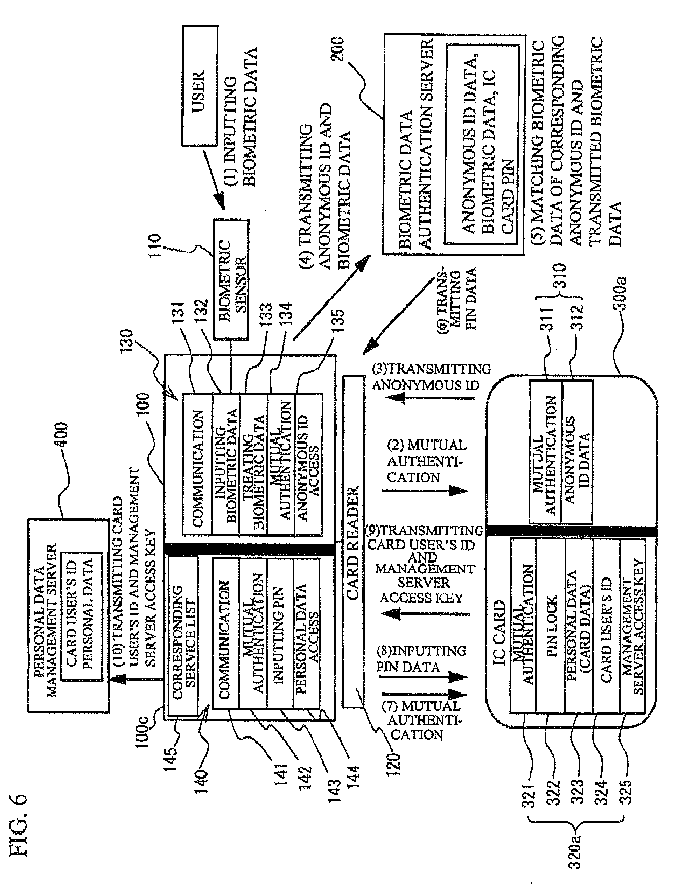

FIG. 6 illustrates a block diagram for describing a person authentication system in accordance with a modified embodiment of the embodiment 3. In the modified embodiment, the IC card terminal stores a service list. The person authentication system in accordance with the modified embodiment is different from the person authentication system in accordance with the embodiment 2 in a point that an IC card terminal 100c is provided instead of the IC card terminal 100. As illustrated in PIG. 6, the IC card terminal 100c is different from the IC card terminal 100 in a point that a corresponding-service-list storage portion 145 is further provided. The corresponding-service-list storage portion 145 stores a list of a plurality of biometric data authentication server services.

In the embodiment, the IC card terminal 100c reads a plurality or biometric data authentication server services from the corresponding-service-list storage portion 145. After that, the IC card terminal 100c displays the biometric data authentication server services with use of a display, and a user may select one of them. Therefore, the user can select a desirable one from the biometric data authentication server services.

### EMBODIMENT 4

A hash value of an anonymous ID calculated in a predetermined format may be stored in a personal data area, in order to secure safety of separation between the personal data area and an anonymous ID area in the IC card 300.

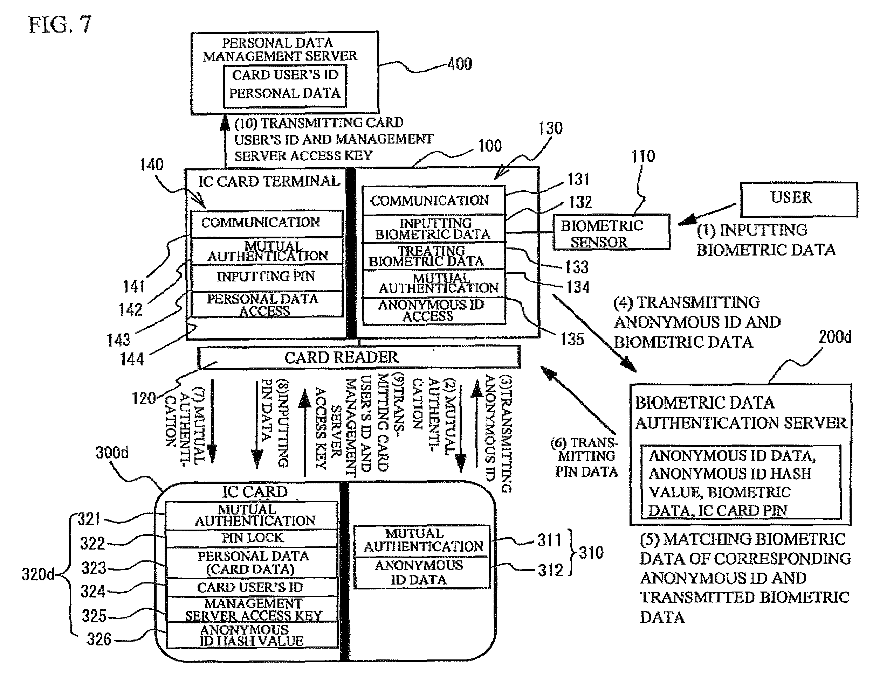

FIG. 7 illustrates a block diagram for describing a person authentication system in accordance with an embodiment 4. The person authentication system in accordance with the embodiment 4 is different from the person authentication system in accordance with the embodiment 2 in points that an IC card 300d is used instead of the IC card 300a and a biometric data authentication server 200d is used instead of the biometric data authentication server 200.

As illustrated in FIG. 7, the IC card 300d has a personal data portion 320d instead of the personal data portion 320. The personal data portion 320d has an anonymous-ID-hash-value storage portion 326 further. The anonymous-ID-bash-value storage portion 326 stores a hash value of an anonymous ID calculated in accordance with a predetermined format. The biometric data authentication server 200d stores the hash value of the anonymous ID.

In the embodiment, when the IC card terminal 100 transmits an anonymous ID to the biometric data authentication server 200d, a hash value of an anonymous ID is transmitted together with the anonymous ID. The biometric data authentication server 200d performs a biometric authentication when a hash value of an anonymous ID stored in the biometric data authentication server 200d corresponds to the hash value of an anonymous ID received by the biometric data authentication server 200d. Therefore, an absolute separation between the anonymous ID data portion 310 and the personal data portion 320d can be secured.

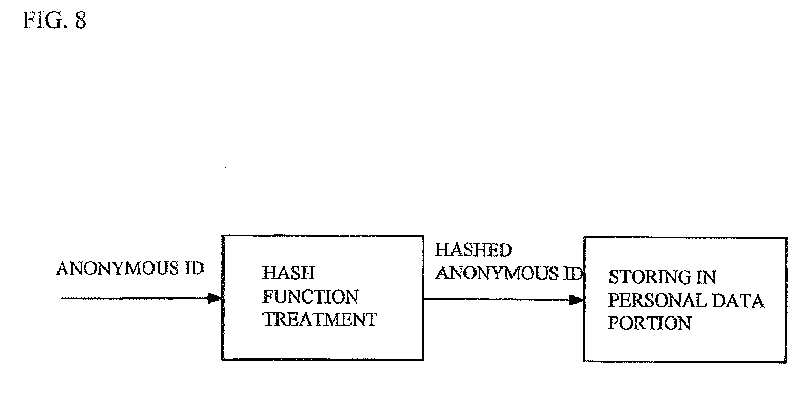

FIG. 8 illustrates a making process of a hash value. When an anonymous ID is translated with a predetermined hash function, the anonymous ID is hashed. By storing the hashed anonymous ID in the anonymous-ID-hash-value storage portion 326, the personal data portion 320d can store a hash value. MD5, SHA-1, SHA-256, SHA-512 or the line may be used as the hash function. The hash value (digest value) may be made with use of HMAC (Keyed-Hashing for Message Authentication code) defined by Request for Comment: 2104 or the like.

### (Modified Embodiment)

A hash value of personal data calculated in a predetermined format may be stored in an anonymous ID data area, in order to secure safety of separation between the personal data area and an anonymous ID area in the IC card 300.

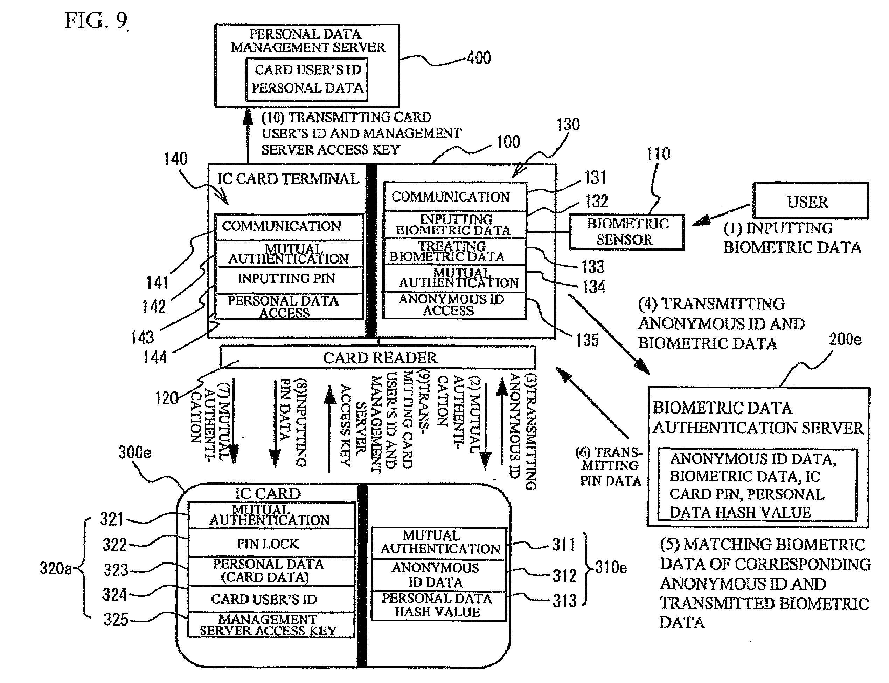

Fig. 9 illustrates a block diagram for describing a person authentication system in accordance with a modified embodiment of the embodiment 4. The person authentication system in accordance with the modified embodiment is different from the person authentication system in accordance with the embodiment 2 in points that an IC card 300e is used instead of the IC card 300a, and a biometric data authentication server 200e is used instead of the biometric data authentication server 200.

As illustrated in FIG. 9, the IC card 300e has an anonymous ID data portion 310e instead of the anonymous ID data portion 310. The anonymous ID data portion 310e has a personal-data-hash-value storage portion 313 further. The personal-data-hash-value storage portion 313 stores a hash value of personal data calculated in a predetermined format. And, the biometric data authentication server 200e stores a hash value of personal data.

In the embodiment, when the IC card terminal 100 transmits an anonymous ID to the biometric data authentication server 200e, an anonymous ID hash value is transmitted together with the anonymous ID. The biometric data authentication server 200e performs a biometric authentication when a hash value of an anonymous ID stored in the biometric data authentication server 200e corresponds to the hash value of an anonymous ID received by the biometric data authentication server 200e. Therefore, an absolute separation between the anonymous ID data portion 31 0e and the personal data portion 320e can be secured.

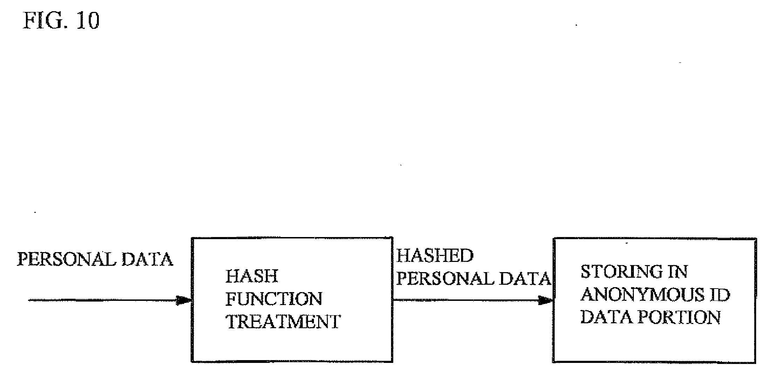

FIG. 10 illustrates a making process of a hash value. When personal data stored in the personal data portion 320a is translated with a predetermined hash function, the personal data is basked. By storing the hashed personal data in the personal-data-hash-value storage portion 313, the anonymous ID data portion 310e can store a hash value.

### EMBODIMENT 5

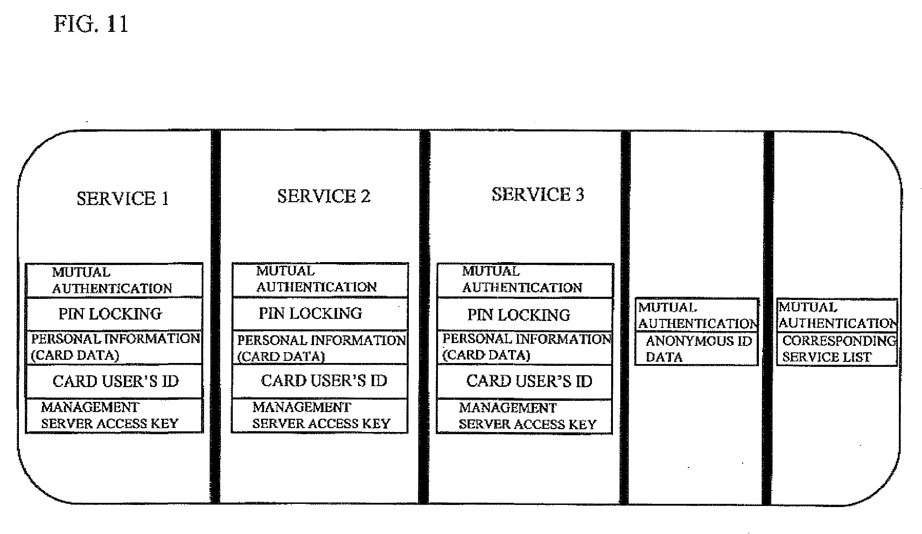

An IC card may store personal data of a plurality of service providers. FIG. 11 illustrates an IC card storing a plurality of personal data. As illustrated in FIG 11, the IC card may store each of the personal data in each of areas where mutual access is forbidden by a firewall. In this case, the IC card can store the personal data of the plurality of service providers.

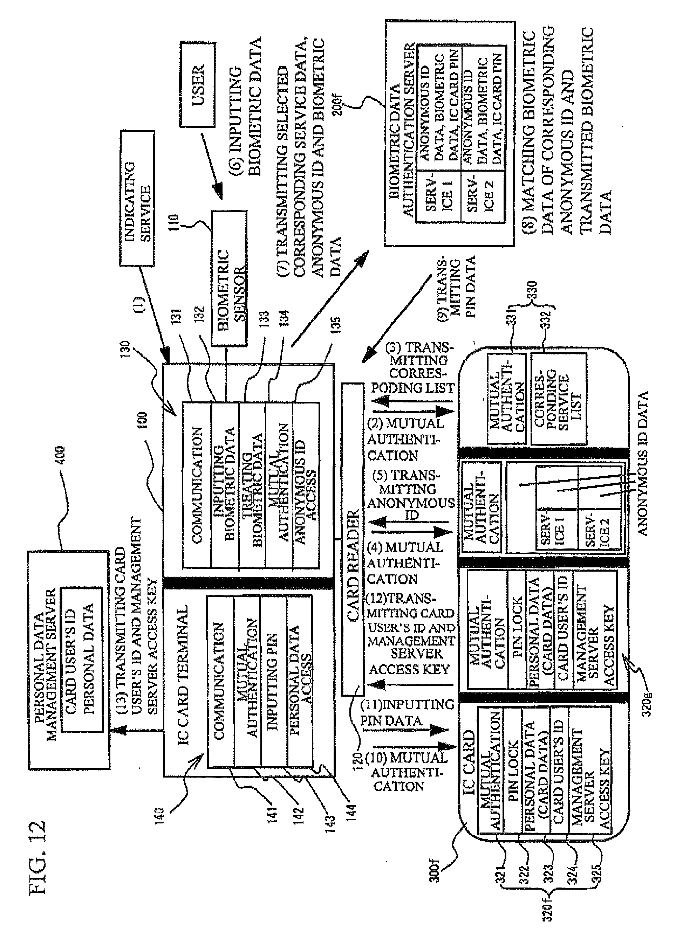

FIG. 12 illustrates a block diagram for describing a person authentication system in accordance with an embodiment 5. The person authentication system in accordance with the embodiment 5 is different from the person authentication system in accordance with the embodiment 2 in points that an IC card 300f is used instead of the IC card 300a, and a biometric data authentication server 200f is used instead of the biometric data authentication server 200.

The IC card 300f has personal data portions 320f and 320g. The personal data portions 320f and 320g store personal data different from each other. And, the IC card 300f stores an anonymous ID according to each of personal data in the anonymous ID data storage portion 312. And, the biometric data authentication server 200f stores anonymous ID data, biometric data and an IC card PIN according to each of personal data. It is therefore possible to make one to one relation of the anonymous ID and the IC card PIN between the IC card 300g and the biometric data authentication server 200g.

A user can access desirable personal data by selecting a desirable service from a service list stored in the corresponding-service-list storage portion 332. An operation until a user accesses personal data is the same as the embodiments 1. Therefore, the explanation is omitted.

### (Modified Embodiment)

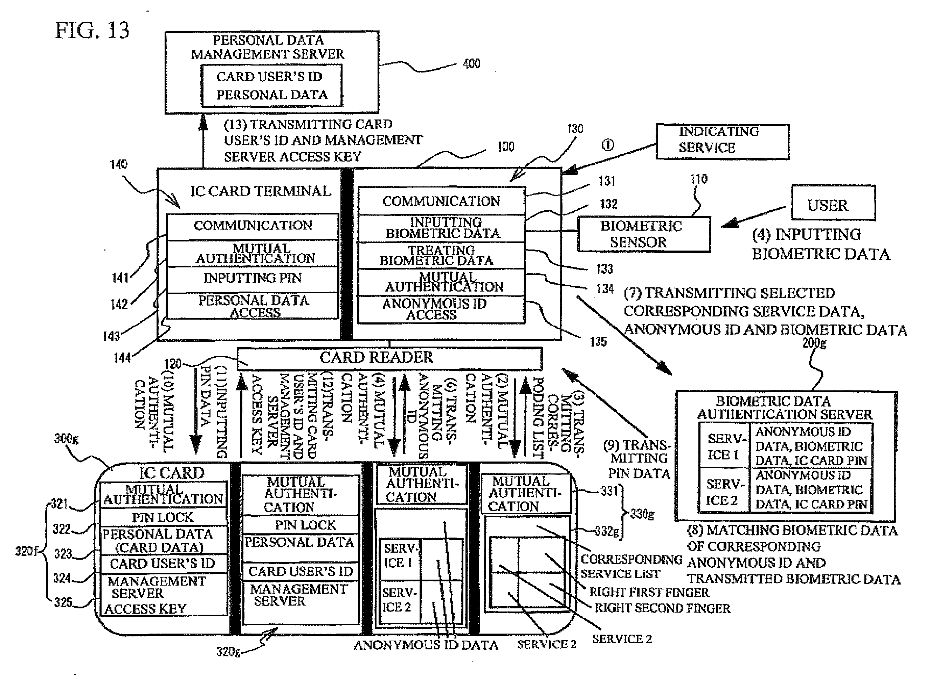

An anonymous ID and fingerprint data of each finger of a user may relate to each other by one to one. FIG. 13 illustrates a block diagram for describing a person authentication system in accordance with a modified embodiment of the embodiment 5. The person authentication system in accordance with the modified embodiment is different from the person authentication system in points that the IC card 300g is used instead of the IC card 300f, and a biometric data authentication server 200g is used instead of the biometric data authentication server 200f.

The IC card 300g is different from the IC card 300f in a point that a service list portion 330g is provided instead of the service list portion 330. The service list portion 330 has a corresponding-service-list storage portion 332g and stores a plurality of services according to each finger.

The biometric data authentication server 200g stores biometric data of each finger of a user as biometric data for matching and relates the biometric data for matching to the service list stored in the corresponding-service-list-storage portion 332g.

The user can access desirable personal data by selecting a desirable service from the service list stored in the corresponding-service-list storage portion 332g and making the biometric sensor 110 acquire an according finger. An operation until a user accesses personal data is the same as the embodiment 1. Therefore, the explanation is omitted.

### (Hardware Structure)

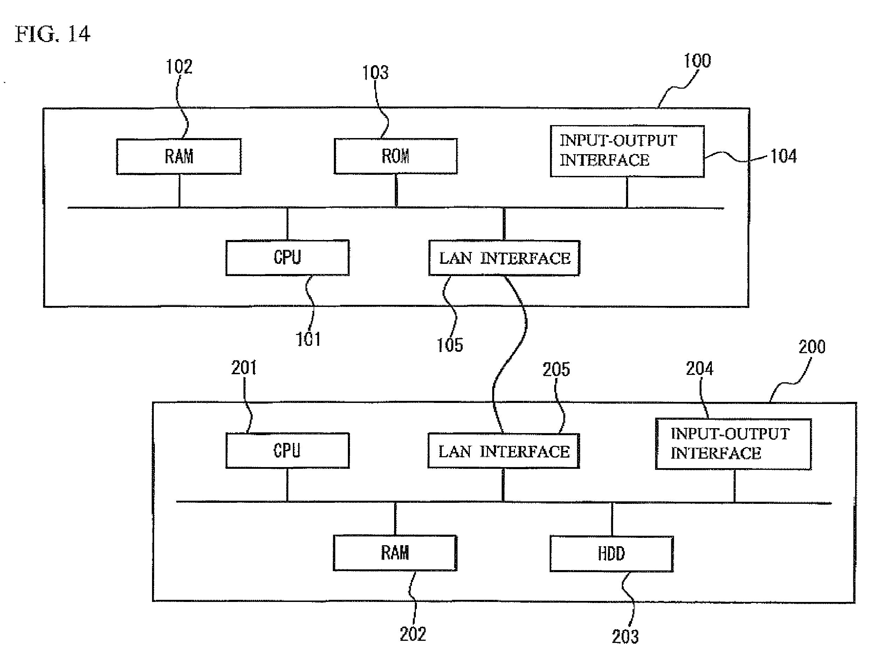

FIG. 14 illustrates a hardware structure of the IC card terminal 100 and the biometric data authentication server 200 in accordance with each embodiment. As illustrated in FIG 14, the IC card terminal 100 has a CPU (Central Processing Unit) 101, a RAM (Random Access Memory) 102, a ROM (Read Only Memory) 103, an input-output interface 104, a LAN interface 105 and so on, The components are coupled to each other via a bus. The IC card terminal 100 acts as the biometric authentication portion 130 and the IC card authentication portion 140, when the CPU 101 executes a program stored in the ROM 103 or the like.

The biometric data authentication server 200 has a CPU (Central Processing Unit) 201, a RAM (Random Access Memory) 202, a HDD (Hard Disk Drive) 203, an input-output interface 204, a LAN interface 205 and so on. The components are coupled to each other via a bus. The biometric data authentication server 200 operates when the CPU 101 executes a program stored in the HDD 203 or the like.

Preferred embodiments of the present invention have been described in detail. The present invention is not limited to the specific embodiments but may be varied or changed within the scope of the claimed invention.

## Claims

1. A person authentication system **characterized by** comprising:
an authentication server storing biometric data for matching related to an anonymous ID of a user;
a biometric sensor acquiring biometric data of the user; and
a terminal acquiring an anonymous ID stored in an electronic storage medium and transmitting the anonymous ID to the authentication server together with the biometric data acquired by the biometric sensor,
wherein the authentication server transmits data needed for an access to personal data stored in the electronic storage medium to the terminal when there is a correspondence to a predetermined extent between the biometric data acquired by the biometric sensor and biometric data for matching related to the anonymous ID.

2. The person authentication system as claimed in claim 1, **characterized in that** the electronic storage medium is a multi application card in which a firewall forbids an access between the anonymous ID and the personal data.

3. The person authentication system as claimed in claim 1 or 2 **characterized in that** the authentication server stores a personal data access PIN as data which the terminal needs in order to access personal data of the electronic storage medium.

4. The person authentication system as claimed in any of claims 1 to 3, **characterized in that**:
the electronic storage medium stores a user ID and a management server access key as the personal data; and
the terminal is capable of accessing personal data of the user stored in a personal data management server by reading the user ID and the management server access key when the terminal receives data needed for an access to personal data in the electronic storage medium.

5. The person authentication system as claimed in any of claims 1 to 4, **characterized in that**:
the electronic storage medium stores a hash value of an anonymous ID calculated in a predetermined format in a personal data area for storing personal data; and
the terminal transmits the hash value to the authentication server together with the anonymous ID.

6. The person authentication system as claimed in any of claims 1 to 5, **characterized in that** the terminal is capable of confirming hash values calculated in formats of a personal data area storing personal data and an anonymous ID area storing an anonymous ID in the electronic storage medium by attaching one of the hash values to the other.

7. A person authentication method **characterized by** comprising:
storing biometric data for matching related to an anonymous ID of a user in an authentication server;
acquiring biometric data of the user with use of a biometric sensor;
acquiring an anonymous ID stored in an electronic storage medium and transmitting the anonymous ID to the authentication server together with the biometric data acquired by the biometric sensor with use of a terminal; and
transmitting data needed for an access to personal data stored in the electronic medium to the terminal when there is a correspondence to a predetermined extent between the biometric data acquired by the biometric sensor and biometric data for matching related to the anonymous ID.

8. The person authentication method as claimed in claim 7, **characterized in that** the electronic storage medium is a multi application card in which a firewall forbids an access between the anonymous ID and the personal data.

9. The person authentication method as claimed in claim 7 or 8 **characterized in that** the authentication server stores a personal data access PIN as data which the terminal needs in order to access personal data of the electronic storage medium.

10. The person authentication method as claimed in any of claims 7 to 9, **characterized in that**:
the electronic storage medium stores a user ID and a management server access key as the personal data; and
the person authentication method further comprises accessing personal data of the user stored in a personal data management server by reading the user ID and the management server access key with use of the terminal when the terminal receives data needed for an access to personal data in the electronic storage medium.

11. The person authentication method as claimed in any of claims 7 to 10, **characterized in that**:
the electronic storage medium stores a hash value of an anonymous ID calculated in a predetermined format in a personal data area for storing personal data; and
the person authentication method further comprises transmitting the hash value to the authentication server together with the anonymous ID.

12. The person authentication method as claimed in any of claims 7 to 11 **characterized by** further comprising confirming hash values calculated in formats of a personal data area storing personal data and an anonymous area storing an anonymous ID in the electronic storage medium by attaching one of the hash values to the other.
